# EUROPEAN PATENT APPLICATION

(11) **EP 4 580 157 A1**
(43) Date of publication of application: **02.07.2025**
(21) Application number: 23873225.9
(22) Date of filing: 27.09.2023
(51) Int. Cl.: H04L 47/263, H04L 47/11, H04L 47/19, H04L 47/20, H04L 47/2408, H04W 28/02

(54) **METHOD AND DEVICE FOR L4S CONGESTION MARKING, REPORTING, AND LOCAL FEEDBACK IN WIRELESS COMMUNICATION SYSTEM**

(30) Priority: 29.09.2022 KR 20220124124
(71) Applicant: Samsung Electronics Co., Ltd., Suwon-si, Gyeonggi-do 16677 (KR)
(72) Inventor: LEE, Jicheol, Suwon-si, Gyeonggi-do 16677 (KR); KIM, Hyesung, Suwon-si, Gyeonggi-do 16677 (KR); BAE, Jaehyeon, Suwon-si, Gyeonggi-do 16677 (KR); BAEK, Youngkyo, Suwon-si, Gyeonggi-do 16677 (KR)
(74) Representative: Gulde & Partner
(86) International application number: PCT/KR2023/015060
(87) International publication number: WO 2024/072116

(57) **Abstract**

The disclosure relates to a 5G or 6G communication system for supporting a higher data transmission rate. The present disclosure relates to a 5G or pre-5G communication system to be provided to support a higher data transmission rate beyond a 4G communication system such as LTE.

## Description

### [Technical Field]

The disclosure relates to a wireless communication system, and more specifically, to a method and device for providing an L4S service in a cellular wireless communication system (5G System).

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

In 3GPP in charge of cellular mobile communication standards, in order to promote evolution from the existing 4G LTE system to a 5G system, a new core network structure is referred to as a 5G core (5GC) and is being standardized.

The 5GC supports the following differentiated functions compared to an evolved packet core (EPC), which is a network core for existing 4G.

First, the 5GC introduces a network slice function. As a requirement of 5G, the 5GC should support various types of UE types and services, for example, enhanced mobile broadband (eMBB), ultra reliable low latency communications (URLLC), and massive machine type communications (mMTC). Each of these UEs/services has different requirements for a core network. For example, an eMBB service may require a high data rate, and an URLLC service may require high stability and low delay. Technology proposed to satisfy these various service requirements is a network slice method.

The network slice is a method of creating multiple logical networks by virtualizing a single physical network, and each network slice instance (NSI) may have different characteristics. Therefore, each NSI may have a network function (NF) that matches characteristics thereof, thereby satisfying various service requirements. As an NSI that matches characteristics of a service required for each UE is allocated, various 5G services may be efficiently supported.

Second, the 5GC may easily support a network virtualization paradigm by separating a mobility management function and a session management function. In the existing 4G LTE, all UEs could receive services from a network through signaling exchange with a single core equipment called a mobility management entity (MME) in charge of registration, authentication, mobility management, and session management functions. However, in 5G, as the number of UEs increases explosively and mobility and traffic/session characteristics that should support according to the UE type are segmented, when a single equipment such as an MME supports all functions, scalability that adds entities for each required function inevitably decreases. Therefore, various functions are being developed based on a structure that separates the mobility management function and the session management function in order to improve scalability in terms of functional/implementation complexity and signaling load of the core equipment in charge of the control plane.

### [Disclosure of Invention]

### [Technical Problem]

In the disclosure, in the case of metaverse and XR applications, because a UE should transmit a large amount of traffic with an uplink, to effectively process uplink traffic is an important technical task, unlike existing applications. Unlike existing studies that have focused mainly on effectively transmitting downlink traffic, in metaverse/XR traffic, to effectively process uplink traffic is a task that should be newly solved. L4S technology is supported by many devices and servers because of an advantage of transmitting a signal indicating whether L4S (ECN) support and congestion with in-band marking on the existing protocol without requiring a call processing signal of a separate control plane between intermediate nodes.

The disclosure is to apply a method of transmitting a large amount of uplink data in the case of metaverse and XR applications and adjusting an uplink transmission rate when network congestion occurs.

The disclosure provides a method of marking congestion occurrence with an in-band, reporting it, and providing quick feedback when a congestion situation occurs because many XR applications use the same base station.

### [Solution to Problem]

According to the disclosure for solving the above problems, a method performed by a user plane function (UPF) in a wireless communication system includes receiving, from a session management function (SMF), a first message including an N4 rule related to a congestion related policy and a congestion report policy; receiving, from a radio access network (RAN), uplink application layer traffic; recording, in the SMF, information related to transmission and reception of the uplink application layer traffic; and transmitting, to the SMF, a second message including an N4 report related to congestion based on the recording.

In an embodiment, the first message further includes information associated with congestion local feedback, and the method further includes transmitting the uplink application layer traffic to an application server (AS) in the case that congestion occurs in the uplink application layer traffic and that information associated with the congestion local feedback is included in the first message.

In an embodiment, in the case that congestion occurs in the uplink application layer traffic, a congestion control code is added.

In an embodiment, the congestion control code is marked in an explicit congestion notification (ECN) bit in a type of service (TOS) field of an Internet protocol (IP) header.

Further, in another embodiment of the disclosure, a user plane function (UPF) in a wireless communication system includes a transceiver capable of transmitting and receiving at least one signal; and a controller coupled with the transceiver, wherein the controller is configured to receive, from a session management function (SMF), a first message including an N4 rule related to a congestion related policy and a congestion report policy, to receive, from a radio access network (RAN), uplink application layer traffic, to record, in the SMF, information related to transmission and reception of the uplink application layer traffic, and transmit, to the SMF, a second message including an N4 report related to congestion based on the record.

Further, in another embodiment of the disclosure, a method performed by a session management function (SMF) in a wireless communication system includes receiving, from a policy control function (PCF), a first message including a congestion related policy and a congestion report policy; generating an N4 rule based on the congestion related policy and the congestion report policy; transmitting, to a user plane function (UPF), a second message including the generated N4 rule; and receiving, from the UPF, a third message including an N4 report related to congestion.

Further, in another embodiment of the disclosure, a session management function (SMF) in a wireless communication system includes a transceiver capable of transmitting and receiving at least one signal; and a controller coupled with the transceiver, wherein the controller is configured to receive, from a policy control function (PCF), a first message including a congestion related policy and a congestion report policy, to generate an N4 rule based on the congestion related policy and the congestion report policy, to transmit, to a user plane function (UPF), a second message including the generated N4 rule, and to receive, from the UPF, a third message including an N4 report related to congestion.

### [Advantageous Effects of Invention]

According to the disclosure, in the case of having a network configuration having an UPF at a rear end of the base station and a long path from the UPF to an application server, because marking information has a long delay time for reaching the server and then returning, a transmission rate in an application program of a terminal can be controlled quickly compared to the prior art.

### [Brief Description of Drawings]

FIG. 1 is a diagram illustrating a network structure and interface of a 5G system.
FIG. 2 is a diagram illustrating an operation when L4S/ECN marking is applied in a RAN in the disclosure.
FIG. 3 is a diagram illustrating a problem that may occur in the case that there is a router that does not support congestion header marking in a backhaul network.
FIG. 4 is a table illustrating an explicit congestion notification (ECN) bit in a type of service (TOS) field of an IP header.
FIG. 5 is a diagram schematically illustrating operations according to an embodiment of the disclosure.
FIG. 6A is a message flow diagram illustrating a procedure according to an embodiment of the disclosure.
FIG. 6B is a message flow diagram illustrating a procedure according to an embodiment of the disclosure.
FIG. 6C is a message flow diagram illustrating a procedure according to an embodiment of the disclosure.
FIG. 7 is a block diagram illustrating a structure of a terminal according to an embodiment of the disclosure.
FIG. 8 is a block diagram illustrating a structure of a network entity according to an embodiment of the disclosure.

### [Mode for the Invention]

5G mobile communication technology defines a wide frequency band to enable a fast transmission speed and new services, and may be implemented not only in a frequency ('sub 6 GHz') band of 6 GHz or less such as 3.5 GHz, but also in an ultra high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., such as 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive multi-input multi-output (MIMO) for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as low density parity check (LDPC) code for large capacity data transmission and polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services in which 5G mobile communication technology was intended to support, and physical layer standardization for technologies such as vehicle-to-everything (V2X) for helping driving determination of an autonomous vehicle and increasing user convenience based on a location and status information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in regions where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service regions by integrating wireless backhaul links and access links, mobility enhancement including conditional handover and dual active protocol stack (DAPS) handover, and 2-step RACH for NR that simplifies a random access procedure is also in progress, and standardization in the field of system architecture/service for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, artificial intelligence (AI)-based communication technology that utilizes AI from a design stage and that realizes system optimization by internalizing end-to-end AI support functions, and next generation distributed computing technology that realizes complex services beyond the limits of UE computing capabilities by utilizing ultra-high performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

In 3GPP in charge of cellular mobile communication standards, in order to promote evolution from a 4G LTE system to a 5G system, a new core network structure is referred to as a 5G core (5GC) and is being standardized. The 5GC supports the following differentiated functions compared to an evolved packet core (EPC), which is a network core for 4G.

The 5GC introduces a network slice function. As a requirement of 5G, the 5GC should support various types of UE types and services, for example, enhanced mobile broadband (eMBB), ultra reliable low latency communications (URLLC), and massive machine type communications (mMTC). Each of these UEs/services has different requirements for a core network. For example, an eMBB service may require a high data rate, and an URLLC service may require high stability and low latency. To satisfy these various service requirements, network slice technology has been proposed.

Network slicing may mean a method of creating multiple logical networks (e.g., network slices) by virtualizing a single physical network. An activated network slice may be referred to as a network slice instance, and each network slice instance (NSI) may have different characteristics. By constituting a network function (NF) that matches characteristics for each NSI, a mobile communication provider may satisfy various service requirements according to UEs/services. For example, a mobile communication provider may efficiently support multiple 5G services (e.g., eMBB, URLLC, or mMTC) by allocating an NSI that matches characteristics of a service required for each UE.

The 5GC may easily support a network virtualization paradigm by separating a mobility management function and a session management function. In 4G LTE, all UEs may receive services from the network through signaling exchange with a single core entity called a mobility management entity (MME) in charge of registration, authentication, mobility management, and session management functions. In 5G, as the number of UEs (including, for example, MTC UEs) increases explosively, and mobility and traffic/session characteristics that should support according to the type of UE are segmented, when a single entity (e.g., MME) supports all functions, scalability that adds entities for each required function inevitably decreases. Therefore, various functions are being developed based on a structure that separates a mobility management function and a session management function in order to improve scalability in terms of functional/implementation complexity and signaling load of a core entity in charge of a control plane.

Hereinafter, embodiments of the disclosure will be described in detail with reference to the accompanying drawings. Further, in describing the disclosure, in the case that it is determined that a detailed description of a related known function or constitution may unnecessarily obscure the subject matter of the disclosure, a detailed description thereof will be omitted. Terms described below are terms defined in consideration of functions in the disclosure, which may vary according to intentions or customs of users and operators. Therefore, the definition should be made based on the content throughout this specification. For the same reason, some components are exaggerated, omitted, or schematically illustrated in the accompanying drawings. Further, the size of each component does not fully reflect the actual size. In each drawing, the same reference numerals are given to the same or corresponding components. Advantages and features of the disclosure, and a method of achieving them will become apparent with reference to the embodiments described below in detail in conjunction with the accompanying drawings. However, the disclosure is not limited to the embodiments disclosed below, but may be implemented in various different forms, and only embodiments of the disclosure enable the disclosure to be complete, and are provided to fully inform the scope of the disclosure to those of ordinary skill in the art to which the disclosure pertains, and the disclosure is only defined by the scope of the claims. Like reference numerals refer to like components throughout the specification. Further, in describing the disclosure, in the case that it is determined that a detailed description of a related function or constitution may unnecessarily obscure the subject matter of the technical idea according to the disclosure, a detailed description thereof will be omitted. Terms described below are terms defined in consideration of functions in the disclosure, which may vary according to intentions or customs of users and providers. Therefore, the definition should be made based on the content throughout this specification.

Hereinafter, a base station is a subject performing resource allocation of a terminal, and may be at least one of an eNode B, a node B, a base station (BS), a radio access network (RAN), an access network (AN), a RAN node, a radio access unit, a base station controller, or a node on a network. The terminal may include a user equipment (UE), a mobile station (MS), a cellular phone, a smart phone, a computer, or a multimedia system capable of performing a communication function. In the disclosure, a downlink (DL) is a wireless transmission path of a signal transmitted from a base station to a terminal, and an uplink (UL) is a wireless transmission path of a signal transmitted from a terminal to a base station. Hereinafter, although an LTE or LTE-A system may be described as an example, embodiments of the disclosure may be applied to other communication systems having a similar technical background or channel type. For example, 5G mobile communication technology (5G, new radio (NR)) developed after LTE-A may be included in a system to which an embodiment of the disclosure may be applied, and the following 5G may be a concept including existing LTE, LTE-A and other similar services. Further, embodiments of the disclosure may be applied to other communication systems through some modifications within a range that does not significantly deviate from the scope of the disclosure by determination of a person having skilled technical knowledge. In this case, it will be understood that each block of message flow diagrams and combinations of the message flow diagrams may be performed by computer program instructions.

Because these computer program instructions may be mounted in a processor of a general purpose computer, special purpose computer, or other programmable data processing equipment, the instructions performed by a processor of a computer or other programmable data processing equipment generate a means that performs functions described in the message flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article containing instruction means for performing the function described in the message flow diagram block(s). Because the computer program instructions may be mounted on a computer or other programmable data processing equipment, a series of operation steps are performed on the computer or other programmable data processing equipment to generate a computer-executable process; thus, instructions for performing the computer or other programmable data processing equipment may provide steps for performing functions described in the message flow diagram block(s).

Further, each block may represent a portion of a module, a segment, or a code including one or more executable instructions for executing specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function. In this case, a term '-unit' used in this embodiment means software or hardware components such as a field programmable gate array (FPGA) or an application specific integrated circuit (ASIC), and '-unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card. Further, in an embodiment, '-unit' may include one or more processors.

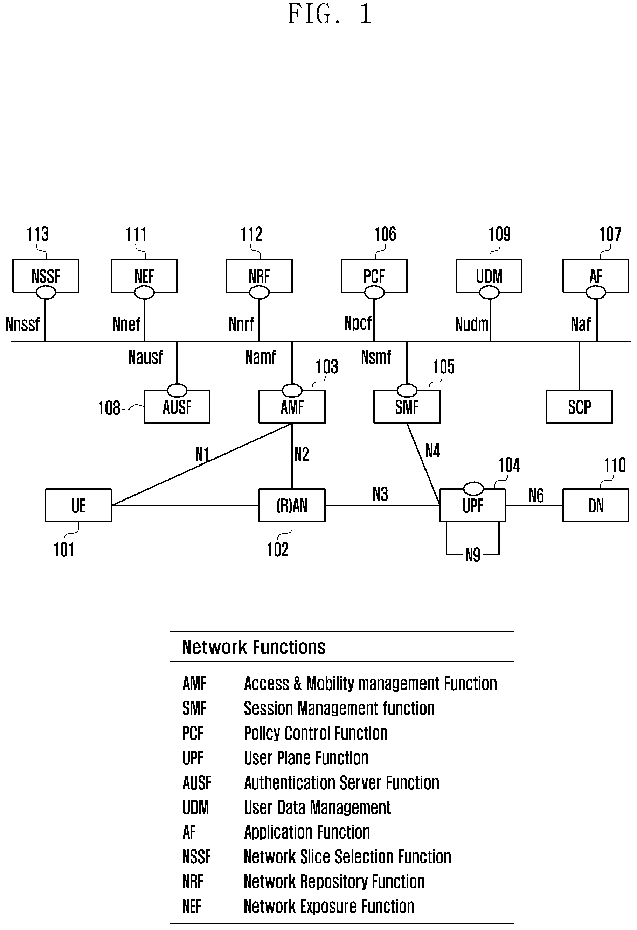

FIG. 1 is a diagram illustrating a network structure and interface of a 5G system according to an embodiment of the disclosure. A network entity included in the network structure of the 5G system of FIG. 1 may include a network function (NF) according to the system implementation.

With reference to FIG. 1, the network structure of a 5G system 100 may include various network entities. For example, the 5G system 100 may include an authentication server function (AUSF) 108, a (core) access and mobility management function (AMF) 103, a session management function (SMF) 105, a policy control function (PCF) 106, an application function (AF) 107, a unified data management (UDM) 109, a data network (DN) 110, a network exposure function (NEF) 111, an edge application service domain repository (EDR) (not illustrated), an edge application server (EAS) (not illustrated), an EAS discovery function (EASDF) (not illustrated), a user plane function (UPF) 104, a (radio) access network ((R)AN) 102, and a terminal, i.e., a user equipment (UE) 101.

Each NF of the 5G system 100 supports the following functions.

The AUSF 108 processes and stores data for authentication of the UE 101.

The AMF 103 provides functions for access and mobility management in units of a UE, and one UE may basically be connected to one AMF. Specifically, the AMF 103 supports functions such as signaling between CN nodes for mobility between 3GPP access networks, termination of a radio access network (RAN) CP interface (i.e., N2 interface), termination (N1) of non access stratum (NAS) signaling, NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, support for network slicing, SMF selection, lawful intercept (for interfaces to AMF event and LI system), provision of transmission of session management (SM) messages between the UE and the SMF, transparent proxy for routing SM messages, access authentication, access authorization including roaming authorization check, provision of SMS message transmission between the UE and the SMSF, security anchor function (SAF), and/or security context management (SCM). Some or all of functions of the AMF 103 may be supported within a single instance of one AMF.

The DN 110 means, for example, a provider service, Internet access, or a third party service. The DN 110 transmits a downlink protocol data unit (PDU) to the UPF 104 or receives a PDU transmitted from the UE 101 from the UPF 104.

The PCF 106 receives information on packet flow from an application server and provides a function of determining policies such as mobility management and session management. Specifically, the PCF 106 supports functions such as supporting a unified policy framework for controlling network operations, providing policy rules so that control plane function(s) (e.g., AMF, SMF) may enforce a policy rule, and implementing a front end for accessing related subscription information for policy determination in the user data repository (UDR).

The SMF 105 provides a session management function, and in the case that the UE has multiple sessions, each session may be managed by a different SMF. Specifically, the SMF 105 supports functions such as session management (e.g., session establishment, modification, and termination, including tunnel maintenance between the UPF 104 and the (R)AN 102 node), UE IP address allocation and management (optionally including authentication), selection and control of UP functions, traffic steering configuration for routing traffic from the UPF 104 to appropriate destinations, termination of an interface to policy control functions, enforcement of a control portion of policies and quality of service (QoS), lawful intercept (for SM events and interfaces to the LI system), termination of an SM portion of NAS messages, downlink data notification, initiator of AN specific SM information (transmission to the (R)AN 102 through N2 via the AMF 103), determination of an SSC mode of a session, and a roaming function. Some or all of functions of the SMF 105 may be supported within a single instance of one SMF.

The UDM 109 stores user subscription data, policy data, and the like. The UDM 109 includes two parts, that is, an application front end (FE) (not illustrated) and a user data repository (UDR) (not illustrated).

The FE includes a UDM FE in charge of location management, subscription management, credential processing, and the like, and a PCF in charge of policy control. The UDR stores data required for functions provided by the UDM-FE and policy profiles required by the PCF. Data stored in the UDR includes user subscription data and policy data including a subscription identifier, a security credential, access and mobility related subscription data, and session related subscription data. The UDM-FE accesses subscription information stored in the UDR and supports functions such as authentication credential processing, user identification handling, access authentication, registration/mobility management, subscription management, and SMS management.

The UPF 104 transmits a downlink PDU received from the DN 110 to the UE 101 via the (R)AN 102, and transmits an uplink PDU received from the UE 101 via the (R)AN 102 to the DN 110. Specifically, the UPF 104 supports functions such as an anchor point for intra/inter RAT mobility, an external PDU session point for interconnection to the data network, a user plane portion of packet routing and forwarding, and packet inspection and policy rule enforcement, an uplink classifier for supporting lawful intercept, traffic usage reporting, and routing of traffic flows to the data network, a branching point for supporting multi-homed PDU sessions, QoS handling for the user plane (e.g., packet filtering, gating, uplink/downlink rate enforcement), uplink traffic verification (service data flow (SDF) mapping between SDF and QoS flow), transport level packet marking in the uplink and the downlink, downlink packet buffering and downlink data notification triggering. Some or all of functions of the UPF 104 may be supported within a single instance of one UPF.

The AF 107 interacts with the 3GPP core network in order to provide services (e.g., support functions such as supporting application influence on traffic routing, access to network capability exposure, and interaction with the policy framework for policy control).

The (R)AN 102 is a general term for a new radio access network that supports both evolved E-UTRA, which is an evolved version of 4G radio access technology, and new radio (NR) technology (e.g., gNB).

The gNB supports functions such as functions for radio resource management (i.e., radio bearer control, radio admission control, connection mobility control, dynamic allocation of resources (i.e., scheduling) to the UE in the uplink/downlink, Internet protocol (IP) header compression, encryption and integrity protection of user data streams, selection of the AMF upon attachment of the UE in the case that routing to the AMF from information provided to the UE is not determined, routing of user plane data to the UPF(s), routing of control plane information to the AMF, connection setup and release, scheduling and transmission of paging messages (originating from the AMF), scheduling and transmission of system broadcast information (originating from the AMF or operation and maintenance (O&M)), measurement and measurement reporting configuration for mobility and scheduling, transport level packet marking in the uplink, session management, support for network slicing, QoS flow management and mapping to data radio bearers, support for UEs in an inactive mode, distribution of NAS messages, NAS node selection, radio access network sharing, dual connectivity, and tight interworking between the NR and the E-UTRA.

The UE 101 means a user device. The user device may be referred to as terms such as a terminal, mobile equipment (ME), and mobile station (MS). Further, the user device may be a portable device such as a laptop computer, a mobile phone, a personal digital assistant (PDA), a smart phone, and a multimedia device, or may be a non-portable device such as a personal computer (PC) or a vehicle-mounted device.

The NEF 111 provides a means for securely exposing services and capabilities provided by 3GPP network functions, for example, for 3rd party, internal exposure/re-exposure, application functions, edge computing. The NEF 111 receives information from other NF(s) (based on exposed capability(s) of the other NF(s)). The NEF 111 may store received information as structured data using a standardized interface to a data storage network function. The stored information may be re-exposed by the NEF 111 to other NF(s) and AF(s) and be utilized for other purposes such as analysis.

The EASDF (not illustrated) is an NF that may add an ECS option that may be expressed as an address of a DNS server to forward a DNS request of a UE for each FQDN, and an IP subnet address that should be added when forwarding a DNS request of the UE. The EASDF (not illustrated) receives EAS domain configuration information from an EDR (not illustrated), and processes a DNS request message received from the UE according to the received information. Further, the EASDF (not illustrated) is an NF that performs a function of receiving a UE IP address and location information of the UE within 3GPP, and a DNS message processing rule and a DNS message reporting rule from the SMF 105, processing a DNS query message received from the UE, a DNS response message received from the DNS server, and transmitting information in a DNS message and statistical information that processes the information to the SMF 105 according to the DNS message reporting rule.

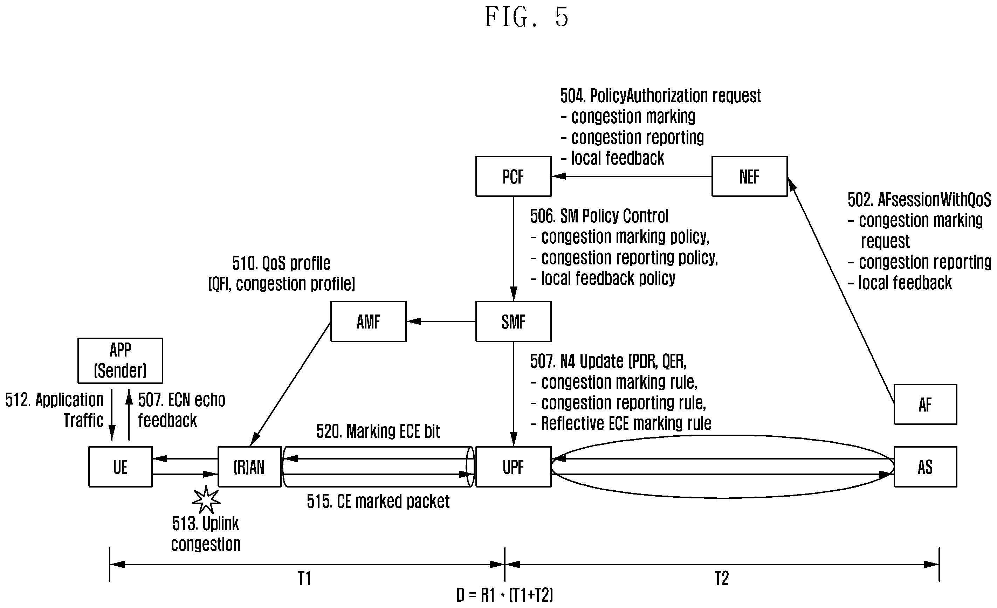

All NFs illustrated in FIG. 5 may perform an interaction with an NRF 112, as needed.

The network repository function (NRF) 112 supports a service discovery function. The NRF 112 receives an NF discovery request from an NF instance and provides information of a found NF instance to the NF instance. Further, the NRF 112 maintains available NF instances and services in which they support.

For convenience of description, FIG. 1 illustrates a reference model for the case that the UE 101 accesses one DN 110 using one PDU session, but the disclosure is not limited thereto.

The UE 101 may simultaneously access two (i.e., local and central) data networks using multiple PDU sessions. In this case, two SMFs may be selected for different PDU sessions. However, each SMF may have a capability that may control both the local UPF and the central UPF within the PDU session.

Further, the UE 101 may simultaneously access two (i.e., local and central) data networks provided within a single PDU session.

In the 3GPP system, a conceptual link connecting NFs within a 5G system is defined as a reference point. As an example, a reference point(s) included in the 5G system 100 of FIG. 1 is(are) as follows.
- N1: Reference point between the UE 101 and the AMF 103
- N2: Reference point between the (R)AN 102 and the AMF 103
- N3: Reference point between the (R)AN 102 and the UPF 104
- N4: Reference point between the SMF 105 and the UPF104
- N6: Reference point between the UPF 104 and the DN 110

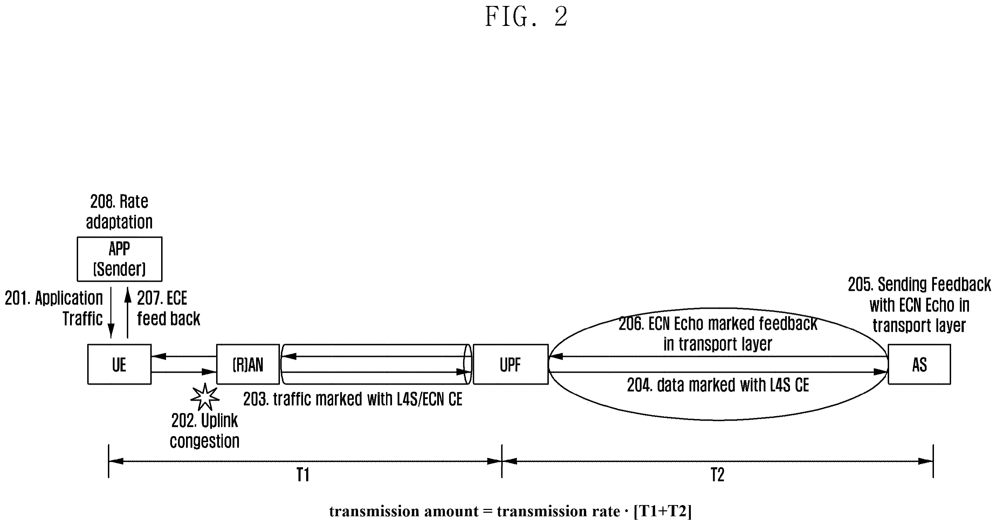

FIG. 2 is a diagram illustrating an operation when L4S/ECN marking is applied in the RAN in the disclosure. It is assumed that L4S/ECN marking is configured to perform in the UPF, RAN, and UE in a 5G network.

At step 202 of FIG. 2, when congestion occurs in the RAN, L4S CE marking is performed in IP data traffic transmitted from the RAN.

At step 205 of FIG. 2, when a received data packet is marked with L4S CE, the AS performs ECN echo marking in the feedback packet (e.g., ACK).

Feedback that has arrived at the UE through steps 206 and 207 of FIG. 2 is interpreted, and the transport layer or application layer of the UE adjusts a transmission rate.

As illustrated in the drawing, this process causes a delay time of (T1+T2) equal to an RTT between the UE and the AS. Because it takes a time of T1+T2 to receive feedback even if congestion occurs, when transmitting at a high transmission rate, the application layer of the UE transmits data equal to a transmission rate x (T1+T2).

In particular, in the case that a duration T2 is long, the time taken to transmit the feedback packet becomes longer.

Even in a congestion situation, the UE continues to transmit data at a high transmission rate to aggravate the congestion situation.

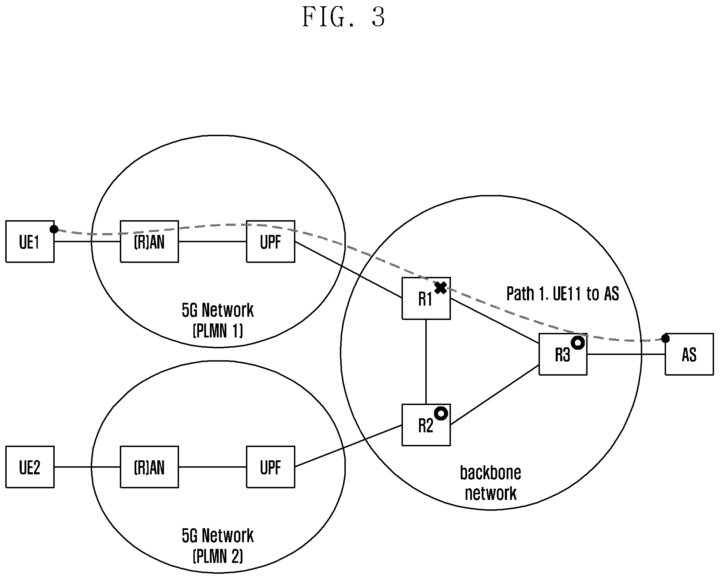

FIG. 3 is a diagram illustrating a problem that may occur in the case that there is a router that does not support congestion header marking in a backhaul network.

A backhaul network may exist together with a 5GG system on a path between the UE and an application layer server, and a plurality of routers may exist in the backhaul network.

In the case that there is a router that does not support L4S/ECN marking on a path between the UE and the application layer server, there may be a problem that L4S/ECN marking is not provided on the entire end-to-end path even if the UE, 5G system, and application layer server support L4S/ECN marking.

In such a network environment, the AS cannot detect the fact that congestion has occurred in the 5G network.

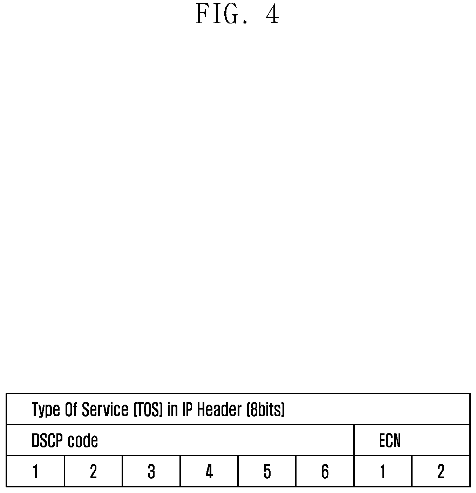

FIG. 4 is a table illustrating an explicit congestion notification (ECN) bit in a type of service (TOS) field of an IP header.

With reference to FIG. 4, upper 6 bits of the TOS field may be used as differentiated service code point (DSCP), and lower 2 bits thereof may be used as bits for marking ECN congestion. The ECN congestion bits may be encoded into the following values.
§ 00 (Non-ECT) Does not support ECN transmission
§ 01 ECT(1) L4S supportable
§ 10 ECT(0) Classical ECN support
§ 11 CE (Congestion Experience)

The disclosure may solve the above-described two problems by supporting the following three functions.

First, the AF request or the provider determines a policy for congestion marking and marks it when congestion occurs.

Second, when congestion occurs during an AF request, it is reported to the AF. In the case that an intermediate router in a backhaul network resets an ECN bit, an application server cannot identify this; thus, the application server may request a notification of congestion occurrence to a control plane through an AF request and receive the notification.

Third, in order to minimize additional congestion that may occur in the case that the intermediate router resets an ECN bit or in the case that there is a long round trip delay time in the backhaul network, when congestion occurs in the UPF within the 5GC, local feedback, which is a function that should be performed by the server's receiver is performed by the UPF instead, thereby providing a fast feedback function.

The above functions may be solved by providing functions such as an AF request, NEF service provision, congestion marking in the PCF, a determination process of a congestion marking policy, a congestion reporting policy, a congestion local feedback policy in the PCF, generation and transfer of N4 rule and RAN congestion profile in the SMF, congestion detection and marking in the RAN and the UPF, reflective feedback marking in the UPF, reporting of congestion occurrence in the UPF to the SMF, and reporting to the AF through the PCF and the NEF.

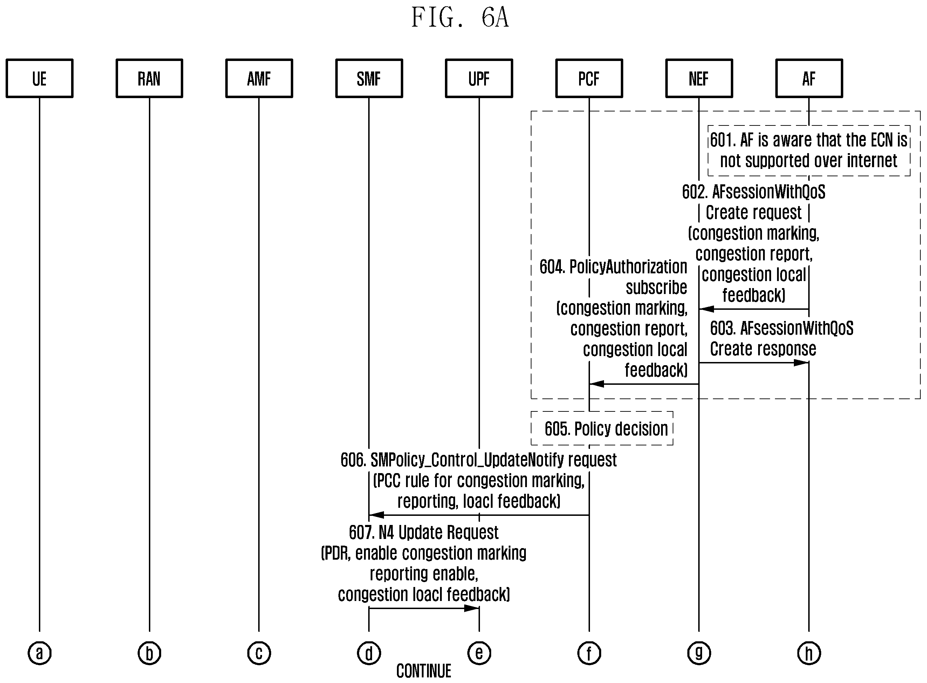

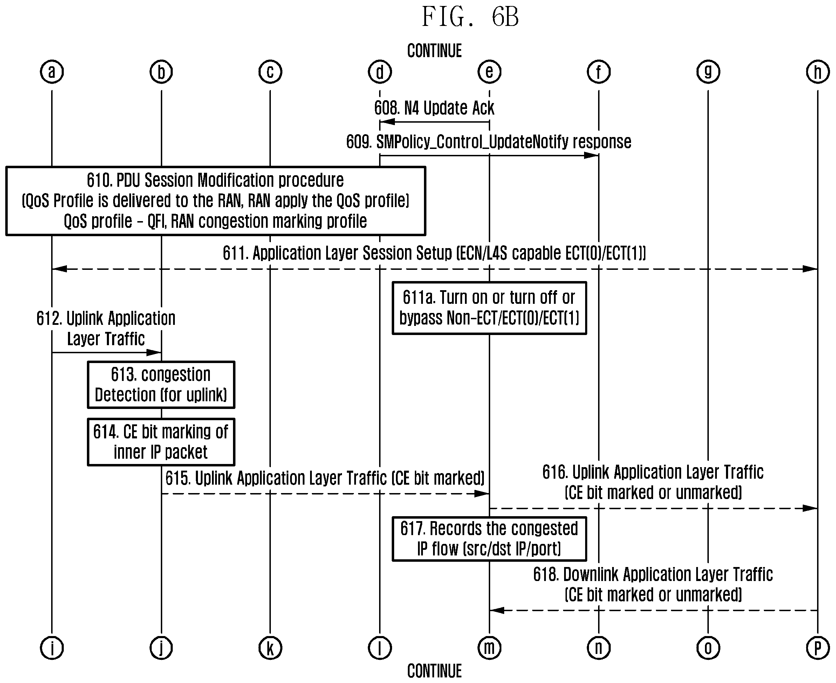

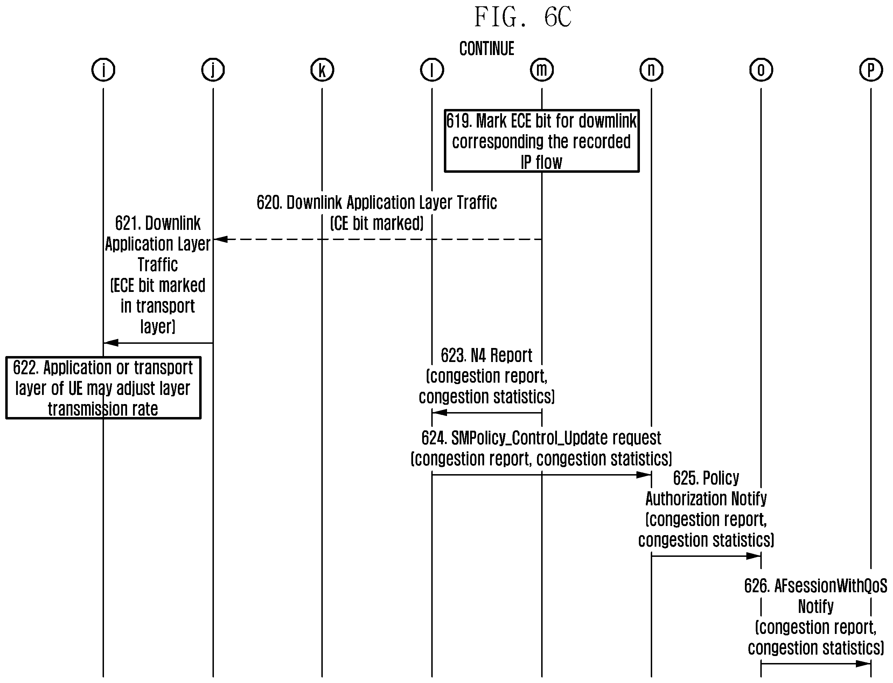

FIG. 5 is a diagram schematically illustrating operations according to an embodiment of the disclosure. Contents described with reference to FIG. 5 are a summarized description of descriptions of FIGS. 6A to 6C, and the operations described with reference to FIG. 5 are described in more detail with reference to FIGS. 6A to 6C. The order of the operations illustrated in FIG. 5 is the same as the order of operations illustrated in FIGS. 6A to 6C.

In the drawing illustrated in FIG. 5, the UE has a RAN and 3GPP wireless connection interface as a modem implemented therein, and the APP refers to an application program implemented in the UE. The 5G network includes a RAN, AMF, SMF, PCF, NEF, and UPF.

An application program of the UE is connected to a data network through a user plane of the 5G network, and an AS exists on the data network. The AF and the AS may be the same network entity, or may be separate network entities. The AF and the AS may be operated by an application provider. The AF may transmit an AF request for a service provided by the AS to the NEF.

At step 502, the AF may transmit a congestion marking request, a congestion reporting request, and a local feedback request to the NEF.

At step 504, the NEF may request the PCF to approve congestion marking, congestion reporting and local feedback policies.

The PCF may transmit a PCC rule including a congestion marking policy, congestion reporting policy, and local feedback policy to the SMF according to a provider policy configured by itself or a request that receives the AF request through the NEF.

The SMF may receive a congestion marking policy, a congestion reporting policy, and a local feedback policy from the PCF, and perform a procedure of updating the N4 rule in the UPF, as in a process of step 507. The UPF that has received this may then detect congestion for QOS flow of the UE corresponding to the user plane, and in the case that congestion occurs, the UPF may perform an operation of marking an ECN field in an IP header according to the congestion marking policy. Further, when a congestion situation occurs, the UPF may report a congestion state to the SMF or to an NF designated by the SMF. In the case that a policy for local feedback is configured, the UPF may detect congestion of uplink traffic from the UE or in the case that the UPF receives a packet with congestion marking detected by the RAN, the UPF may perform marking that congestion has occurred in a transport layer of the corresponding downlink traffic. For example, in the case that the transport layer is a TCP, the UPF may configure an ECN echo flag of the TCP.

The SMF may generate and transmit a congestion profile for each QoS flow in the RAN through the AMF. The RAN that has received the congestion profile may then detect congestion occurrence and perform marking according to the designated policy in the ENC field in the IP header according to a marking policy, when a congestion situation occurs.

When traffic occurs in the APP of the UE, the UE generates uplink traffic in the RAN. The RAN may detect congestion, and when congestion is detected, the RAN may transmit a CE marked packet to the UPF.

In the general case that a policy for local feedback is not transmitted to the UPF, a congestion marked packet is transmitted to the AS, and the transport layer of the AS or an upper layer may transmit feedback on congestion occurrence to the downlink in response thereto. In this case, it is taken a time of at least T1+T2 in order for the APP of the UE to detect congestion. In this case, assuming that the transmission rate is R1, traffic transmitted from the APP continues to be transmitted by an amount R1 x (T1+T2) even in a congested situation.

When a local feedback method disclosed in the disclosure is applied, because the UPF instead of the AS transmits feedback from the transport layer, the time in which the transmission side of the transport layer receives feedback when a congestion situation occurs is reduced to T1; thus, an operation of adjusting a transmission amount may be taken more quickly in the congestion situation. Further, because the amount of traffic generated in the congestion situation is less than the existing R1 x (T1 + T2) by R1 x T2, the overall congestion situation may be escaped more quickly.

When the UPF detects occurrence of congestion, the UPF may report congestion situation occurrence to the control plane. Because the backhaul network does not support ECN or L4S, even in the case that the IP header does not mark in-band, congestion control may be performed using only functions within 5GC, and the AS server may also receive a report on this.

FIGS. 6A to 6C are message flow diagrams illustrating a procedure according to an embodiment of the disclosure. Hereinafter, the procedure of FIGS. 6A to 6C will be described step by step in order to describe the detailed operation of the disclosure.

### Step 601. Determination on the request of the AF

With reference to the network environment of FIG. 3, the AF may know in advance whether L4S/ECN is supported in a backhaul connection network between a data center where the AF exists and a provider network and in a provider network through a prior agreement with the provider or through its own network deployment. The AF may know in advance whether an L4S or ECN function is supported through a TCP connection procedure between the UE and an application provider network.

An application service provider may determine whether classic ECN or L4S is supported on a 5G network and a router passing through a path between the UE (UE1) and an application server (a path expressed by the dotted line between the UE1 and the AS in the drawing) during a process of configuring a transport layer or application layer session between the UE and the application server.

For example, when the UE1 transmits a TCP SYN packet in order to configure a TCP session, the TCP SYN packet passes through the RAN and the UPF of the 5G network and reaches the AS via R1 and R3.

A value of an ECN field of a TOS field of an IP header of a transmitting TCP SYN packet may be marked as ECT(0) and transmitted in the case that the UE supports a classic ECN, and be marked as ECT(1) and transmitted in the case that the UE supports L4S. In the case that there is a router that does not support ECN or L4S among routers through which the TCP packet passes between the UE and the AS, a value of ECN in the intermediate router may be reset to no ECT support and transmitted. The AS that has received the TCP SYN packet along the path may know whether ECN/L4S is supported on the path with the UE.

It is assumed that an application service provider may know in advance whether the 5G network managed by the mobile communication provider supports ECN/L4S, and know whether an intermediate backhaul network supports ECN/L4S through an agreement or through the method described in the above example.

### Steps 602 and 603. Transmit the AF request

In the case that the application service provider knows whether the backhaul network supports ECN/L4S with the method described at step 601, the AF may request an AF session request including QoS related parameters to the 5G network for the following purposes.

In the case that the application service provider represented by the AF wants to utilize an ECN/L4S function, the application service provider may transmit the AF request to the NEF in the following scenario.

### L4S Support Request

The AF may request the support for an L4S service to the 5G network for IP flows used or intended to be used by the application service provider.

The 5G network that has received an L4S request may manage traffic with a QoS flow that provides separate L4S functions for requested traffic, and perform a function of transmitting traffic with a separate QoS flow that provides low latency, low loss, and scalable throughput.

The AF may provide information that may distinguish the corresponding traffic or service requesting L4S support.

By requesting L4S support, the AF requests to perform a marking function of experiencing congestion in the ECN bit of the TOS field of the IP header in the case that the corresponding traffic experiences congestion in the 5G network.

When congestion occurs, the AF may request L4S marking following the L4S specification or request marking that performs an operation consistent with classic ECN.

### Congestion reporting request

The AF may apply to subscribe to a service that requests a notification of a congestion level.

A subscription request message of the AF may include an indicator requesting congestion reporting and parameters associated with the indicator. The parameters associated with the congestion reporting may designate conditions of the congestion reporting. The parameters associated with the congestion reporting may include a type of congestion reporting and a congestion reporting method.

Congestion reporting condition: The congestion reporting condition may include a congestion level threshold value. In the case that a congestion level threshold is included in the congestion reporting condition, the 5G system reports congestion to a reporting address of the AF that has requested reception of reporting in the case that congestion occurring therein is equal to or greater than the threshold.

### Local feedback request

The content proposed in the disclosure may be used in the case that the backhaul network does not support ECN/L4S marking, in the case that feedback on data transmitted in the uplink is not transmitted, or even in the case that the backhaul network supports ECN/L4S marking, because a lot of round trip delay time is consumed in the backhaul network on a path between the UE and the AS, in the case that congestion occurs in the uplink in the RAN within the 5GC, and in the case that it is desired to quickly feed this back to the UE.

### Step 604. Request for policy approval from the NEF to the PCF

At step 602, the NEF that has received an L4S support request, congestion reporting subscription request, and L4S/ECN local feedback execution request from the AF may perform the following procedures.

The NEF may verify subscriber information for a request to the AF in the UDM.

In the case that subscriber information included in the AF request is GPSI, the NEF may request to replace the GPSI with SUPI information for indicating a subscriber within the 5GC network.

In the case that subscriber information included in the AF request is subscriber group information, the NEF may request to replace subscriber group information within the 5G network with a group identifier within the 5GC network.

In the case that subscriber information included in the AF request is subscriber group information and may be replaced with a list of multiple subscriber information, the NEF may request such replacement through the UDM.

In order to identify the AF identifier and information on a service requested by the AF and whether subscriber information corresponds to the provider's subscription policy, the NEF may request approval for an AF request to the UDM.

The NEF transmits a policy approval subscription request to the PCF. A policy approval subscription request message may include the following information and be transmitted.

The policy approval subscription request message may include a congestion reporting service subscription request indicator, a congestion reporting level threshold, and a congestion reporting type.

The congestion reporting type may include an indicator indicating a report of congestion occurrence when a congestion situation occurs.

The NEF may request congestion occurrence statistics information. The congestion occurrence statistics information may include information on a period during which congestion has occurred during a congestion occurrence monitoring period. Alternatively, the congestion occurrence statistics information may include information such as the number of congestions that have occurred during the congestion occurrence monitoring period, the frequency of congestion that have occurred during a unit period, and the period during which congestion has occurred above a designated congestion level during the monitoring period.

### Step 605. Determination of L4S/ECN congestion control policy of the PCF

When the PCF determines to provide an L4S/ECN service according to the provider policy, the PCF may perform an SM policy control update notification procedure. The PCF may include an L4S/ECN related PCC rule in a SM policy control update notification request message and transmit the SM policy control update notification request message to the SMF. The L4S/ECN related PCC rule may include the following information.

§ Service data flow information (SDF): It is information that may identify a service flow to which L4S/ECN is to be applied. It may be expressed as a service data flow template. It may be expressed as an IP sender/destination address or range, a sender/receiver port number or range, or an FQDN value or FQDN range, for example, a range of FQDNs expressed in a regular expression format.

§ L4S/ECN marking related information may include an L4S/ECN marking policy and an L4S/ECN congestion experience bit marking policy. The L4S/ECN marking policy may have policies including whether L4S/ECN marking is supported, L4S/ECN marking version, and transparent L4S/ECN marking support. For example, the L4S/ECN marking policy may include information configuring an ECT bit. For example, marking for an ECN bit of an IP TOS may be indicated as follows.

No ECT capable: Does not allow any ECT and reset all ECN bits in the TOS field of the IP header to 0.

ECT(0) capable: Allow only ECT(0) indicating classical ECN. The ECT(0) indicates a value that encodes ECN bits in the TOS field of the IP header into 01.

ECT(1) capable: Allow only ECT(1) indicating L4S. The ECT(1) indicates a value that encodes the ECN bits in the TOS field of the IP header into 10.

Bypass ECT: Passes ECT(0) and ECT(1) without modification. In the case that the L4S/ECN marking policy is not configured separately, it may be regarded as a bypass ECT policy.

§ The L4S/ECN congestion experience bit marking policy may include the following information.

Directionality: Information indicating uplink or downlink.

Congestion level threshold information: Indicator information requesting marking in the case that the congestion level is higher than the threshold indicated by this information.

### § Information related to L4S/ECN congestion local feedback service

L4S/ECN local feedback indicator: Indicator that requests to configure a congestion experience bit for the corresponding downlink traffic in the case that the congestion bit of L4S/ECN is marked for the uplink.

Information that may indicate QoS flow applied to local feedback: QoS flow identifier or 5QI information

An indicator that may designate a PDU session that should apply local feedback.

L4S/ECN congestion reporting related policy information may include an indicator requesting congestion reporting and associated parameters.

Parameters associated with congestion reporting may designate conditions for congestion reporting. Conditions for congestion reporting may include a threshold value of a congestion level. In the case that a threshold of a congestion level is included in conditions for congestion reporting, the PCF may monitor whether congestion in the user plane or whether the congestion level is equal to or greater than the threshold, either by the SMF itself or from the RAN or the UPF, and in the case that the congestion level is equal to or greater than the threshold, the PCF may perform a reporting procedure for congestion experience thereto or to a notification address designated by the PCF.

In congestion reporting related parameters, congestion reporting conditions may include a reporting type or a reporting method for congestion reporting when congestion occurs.

The congestion reporting type may be one-time reporting or continuous reporting.

In the case of a continuous reporting type, reporting may be requested in the case that a congestion situation occurs, in the case that a congestion level is equal to or greater than a certain level (congestion level threshold), or in the case that a congestion situation being equal to or greater than a certain level continues during a designated time period. In this way, additional parameters such as a congestion level threshold and a congestion duration may be further configured according to the congestion reporting type.

The continuous reporting type may additionally designate a time that detects congestion reporting from a current time or a last time reporting a congestion situation.

Congestion reporting related parameters may include the following information on the congestion reporting.

### § Information on a congestion reporting target UE

Information that may designate a congestion reporting target UE. It may include information such as a UE subscriber identifier (SUPI) or GPSI, or IP address of the UE or Ethernet address.

Information related to a UE group to be a congestion reporting target: It indicates information on the UE group. An identifier of the subscriber group (external group ID) or an identifier of a subscriber group within a 5GC (internal group ID).

§ Information on a congestion reporting target service and a target traffic type

Congestion reporting target service from information such as a service identifier or application identifier to be a congestion reporting target, or an AF identifier sent the AF request.

Session identifiers to be a congestion reporting target: Session identifiers to be a congestion reporting target such as DNN and S-NSSAI

Traffic information to be a congestion reporting target: It may include information on the type of traffic to be a congestion reporting target such as IP address and range of the server, FQDN, or FQDN range.

### § Congestion reporting address

When congestion occurs, it indicates a congestion notification reply address that receives information in which congestion has occurred. Address information is an address that may reply information such as an IP address or URL.

The PCF may determine local feedback on L4S/ECN congestion by a request from an NF within a 5GC, a request from an AF via the NEF, or the PCF's own determination by a provider policy.

In order to determine a local feedback policy according to a provider policy, the PCF may refer to policy information on congestion local feedback stored in the UDR. The policy information on congestion local feedback may include the following contents.
§ Whether an L4S/ECN local feedback service is provided
§ Transport layer protocol providing an L4S/ECN local feedback service (e.g., TCP, QUIC or RTP)
§ Application server address or range of server addresses for providing an L4S/ECN local feedback service
§ Server address expressed as FQDN or range of FQDN for providing an L4S/ECN local feedback service
§ Group information or subscriber category information that may indicate a subscriber group or subscriber information that provides L4S/ECN local feedback

Step 606. Transmission of congestion policy and reporting related policy.

The PCF transmits the congestion policy and reporting related policy determined at step 605 to the SMF. The SMF that has received the congestion related policy and congestion reporting policy determines contents of a congestion related QoS profile to transmit to the RAN. The PCF initiates a PDU session change procedure. (Step 610)

The SMF creates an N4 rule according to the congestion related policy and congestion reporting policy in the UPF and performs a procedure of updating the N4 rule in the UPF. (Steps 607 and 608)

Step 607 and step 608. Determination and transmission of an N4 Rule in the SMF

The SMF may transmit L4S/ECN related N4 rules associated with QER in units of a QoS flow to the UPF.

The L4S/ECN related N4 rules associated with QER may determine the following L4S/ECN marking control code and transmit them to the UPF.

The L4S/ECN marking control code may have the following values.

§ Resetting ECN: Reset the ECN bits for incoming flows to QoS flows that match QFI.

§ Classic ECN marking: For incoming packets marked as ECT(1), if congestion occurs above the congestion level, it is marked with a CE bit.

§ L4S marking: For incoming IP packets marked as ECT(1), if congestion occurs above the congestion level, it is marked with a CE bit.

§ Bypass ECN field: Transmit a ECN marked content as it is without changing.

The SMF may additionally include a congestion level threshold value for CE bit marking together with an L4S/ECN marking control code and transmit it to the UPF. In the case that the ECN marking control code is classic ECN marking or L4S marking, the congestion level threshold is a congestion level threshold that performs CE bit marking. In the case of L4S marking and class ECN marking, the congestion level threshold may have separate values.

In the case that the N4 rule related to QoS flow includes an N4 rule related to L4S/ECN and that the marking control code includes a content supporting classic ECN marking or L4S marking, the UPF may receive congestion information including whether RAN congestion or a RAN congestion level from the RAN, and determine whether congestion in consideration of the congestion information.

The UPF may manage separate queues for forwarding packets therein, and these queues may be managed for each QoS flow, and determine whether congestion and a congestion level from an internal configuration related to the internal implementation of the UPF or a provider configuration, or information configured in advance from the SMF.

When the SMF receives congestion reporting related policy information in the PCC rule, in order to report congestion experience, the SMF may transmit a QoS profile for congestion experience reporting to the RAN.

When the SMF receives congestion reporting related policy information in the PCC rule, in order to report congestion experience, the SMF may generate an N4 rule for congestion experience reporting and transmit the N4 rule to the UPF.

The congestion reporting N4 rule in which the SMF transmits to the UPF may include the following information.

### § Congestion state change reporting request

In the case that a normal state is changed to a congested state or that a congest state is changed to a normal state, the SMF reports a state indicating whether congestion. Alternatively, the SMF may report a congestion level.

The congestion level may have a value representing a congestion level from 0 to 9. In the case that the congestion level has a specific value, it may indicate a non-congestion state. For example, 0 may indicate a non-congestion state, and the congestion level may be expressed as a value from 1, which is a low congestion level value to 9, which indicates a very congestion state.

### § Congestion experience reporting request

Request to report when congestion occurs above a designated congestion level.

In the case that congestion in a specific congestion level is detected above a designated congestion level, it may be reported immediately.

Congestion experience reporting request may add time period information.

In the case that congestion is continued above a designated congestion level during a designated time period, it is requested to report this.

In the case that congestion above a designated level is experienced during a designated time period, it may be reported. The designated time period and the designated congestion level may be included in the reporting policy or may have values configured by the SMF.

### § Periodic reporting of congestion state

Regularly report congestion levels on QoS flows. For regular reporting, information on a reporting period should be included.

§ May include an address (e.g., URL or server address) that receives congestion experience reporting.

### § Request to report a change in congestion state

The SMF may request to report information on a change in a current congestion value to the UPF. For example, the SMF may request UPF congestion state change reporting in order to perform a report notifying this at a time point of the start or end of congestion experience.

The SMF may receive a PCC rule and instruct the UPF to perform transport layer congestion experience feedback.

An UL transport layer congestion experience feedback indicator (TLCEF) in which the SMF instructs to the UPF may be indicated in units of a QoS flow, and the transport layer congestion experience feedback indicator may be transmitted together with QER or be transmitted to the UPF together with an indicator indicating QoS flow.

The SMF may provide, to the UPF, protocol information designating bits that should be marked in the transport layer protocol and the transport layer protocol that provides feedback when congestion for a UL QoS flow occurs together with a transport layer congestion experience feedback indicator.

§ For example, a TCP transport layer protocol may include the following information and be transmitted.

### Transport layer protocol type: TCP

### Transport layer feedback information: ECN echo bit (ECE) configuration

Alternatively, the type of the transport layer protocol and a series of feedback execution methods that should be performed in the designated transport layer protocol may be defined in advance, and congestion feedback index information that indicates this may be transmitted together. For example, in the case of a first congestion feedback index, the first congestion index may perform a feedback operation in which an end node should perform in the network in the case that the designated transport layer protocol receives a CE marked packet. For example, in the case that the TCP transport layer protocol receives a CE marked packet, the TCP transport layer protocol may perform an operation of marking an ECE echo bit in a TCP response message thereof and transmitting the TCP response message.

Step 609. SM policy control update notification response reply

The SMF transmits, to the PCF, a response message for the SM policy control update notification request received at step 606.

### Step 610. PDU session update operation

The SMF performs a PDU session update procedure to the base station. During the PDU session update procedure, the SMF transmits a QoS profile to the RAN, and transmits an ECN/L4S congestion control profile within the QoS profile. The ECN/L4S congestion control profile may include the following information.

§ QFI: Value that may indicate a QoS flow allocated by the SMF.

§ 5QI: A 5QI value in which a detailed value of the congestion control profile is standardized and defined in advance, or an index that indicates a congestion control profile defined in advance by the provider.

§ RAN congestion L4S marking support profile
L4S/ECN capability marking policy
No ECT capable (resetting L4S/ECN bits)
ECT(0) capable - Classic ECN
ECT(1) capable - L4S capable
Bypass ECT (default)
Direction: Uplink/Downlink
ECN marking control code and operation when receiving a control code
Resetting ECN: Reset ECN bits for incoming flows to QoS flows that match QFI.

Classic ECN marking: Mark with a CE bit when congestion occurs above a congestion level for incoming packets marked as ECT(1).

L4S marking: Mark with a CE bit when congestion occurs above the congestion level for incoming IP packets marked as ECT(1).

Bypass ECN field: Transmit the ECN marked content as it is without changing.

Congestion level user plane reporting indicator: In a PDU session update procedure process, the SMF may include a congestion level user plane reporting indicator in the QoS profile and transmit the QoS profile to the RAN. The RAN that has received this may include whether congestion occurs and a congestion level in the GTP header when congestion occurs and transmit it to the UPF.

Congestion level threshold for CE bit marking

It is a congestion level threshold that performs CE bit marking in the case that the ECN marking control code is classic ECN marking or L4S marking.

The congestion level threshold may have separate values in the case of L4S marking and class ECN marking.

A module that detects UL congestion in the RAN determines whether congestion in a radio resource that may allocate to the following information from the UE, QoS flows of the UE or the corresponding logical channel, and a resource for a module that processes RLC/PDCP/IP/GTP protocols.

Information that may be received from a UE in order to determine a congestion state may include a buffer state report of the UE, a channel quality index (CQI) report of the UE, or a wireless channel state measurement report of the UE.

A module that detects congestion in the UE may be a radio resource scheduler that performs a function of allocating a radio resource for the uplink.

In order to determine congestion of QoS flow of the uplink or the corresponding logical channel, the RAN may use a predefined congestion level. The congestion level may be determined in various ways from a combination of thresholds for the QoS flow of the UE or a wireless resource for the corresponding logical channel and a computing resource that process the protocol listed above.

When the RAN determines congestion on the uplink, the RAN transmits congestion information to the module that processes the protocol, and the module that processes the protocol interprets the corresponding IP header. According to the ECN field value in the TOS field of the IP header, the congestion control operation profile, whether congestion, and the ECN value in the arrived IP header, the module may operate as follows.

§ In the case that a value of the congestion control profile is "Reset ECN", the ECN value is configured to 00 (No ECT) and transferred.

§ In the case that a value of the congestion control profile is "bypass", the ECN value is not identified and transferred as it is. The congestion control profile being bypass may operate in the same way even in the case that there is no congestion control profile.

§ In the case that a value of the congestion control profile is L4S marking and that the ECN value of the arrived IP header is ECT(1) capable and that the congestion is congestion greater than the designated congestion level or a predefined congestion level threshold, it is configured to ECT(1).

§ In the case that a value of the congestion control profile is classic ECN marking and that the ECN value of the arrived IP header is ECT(0) capable and is greater than the designated congestion level or a predefined congestion level threshold, two ECN bits are reconfigured to the CE bit (i.e., mark the CE bit), otherwise, the ECT(0) value is maintained as it is.

A module that detects congestion in the UPF manages QoS flows or corresponding packets as a resource for buffering or a resource for modules that process protocols; thus, the UPF may determine whether congestion when transmitting packets processed for each QOS flow.

In order to determine congestion for QoS flows or buffering resources, the UPF may use a predefined congestion level. The congestion level may be determined in various ways from a combination of thresholds for the QoS flow of the UE or the corresponding resource and a computing resource that process the protocol listed above.

According to the ECN field value in the TOS field included in the IP header, the congestion control L4S/ECN marking control code received from the SMF, and whether congestion, the UPF operates as follows.

According to the congestion control L4S/ECN marking control code, whether congestion, and the ECN value in the arrived IP header, the UPF may operate as follows.

In the case that a congestion control L4S/ECN marking control code value is "Reset ECN", the ECN value is configured to 00 (No ECT) and transferred.

In the case that a congestion control L4S/ECN marking control code value is "bypass", the ECN value is not identified and transferred as it is. The congestion control profile being bypass may operate in the same way even in the case that there is no congestion control profile.

In the case that a congestion control L4S/ECN marking control code value is L4S marking and that the ECN value of the arrived IP header is ECT(1) capable and that congestion is congestion greater than the designated congestion level or a predefined congestion level threshold, two ECN bits are reconfigured to the CE bit (i.e., mark the CE bit), otherwise, the ECT(1) value is maintained as it is.

In the case that a congestion control L4S/ECN marking control code value is classic ECN marking and that the ECN value of the arrived IP header is ECT(0) capable and is greater than the designated congestion level or a predefined congestion level threshold, two ECN bits are reconfigured to the CE bit (i.e., mark the CE bit), otherwise, the ECT(0) value is maintained as it is.

### Step 612. Transmission of application layer traffic from the UE

The application layer/transport layer program of the UE transmits uplink traffic.

### Step 613. Congestion detection in the RAN

The RAN may detect congestion in the uplink of the UE.

A module that detects UL congestion in the RAN determines whether congestion in the following information from the UE and the QoS flow of the UE or a radio resource that may allocate to the corresponding logical channel, and a resource for a module that processes RLC/PDCP/IP/GTP protocols.

Information that may be received from the UE in order to determine the congestion state may include a buffer state report of the UE, a channel quality index (CQI) report of the UE, or a measurement report on a wireless channel state of the UE.

A module that detects congestion in the UE may be a radio resource scheduler that performs a function of allocating radio resources for the uplink.

In order to determine congestion of QoS flow of the uplink or the corresponding logical channel, the RAN may use a predefined congestion level. The congestion level may be determined in various ways from a combination of thresholds for the QoS flow of the UE or a wireless resource for the corresponding logical channel and a computing resource that process the protocol listed above.

### Step 614. Congestion experience bit marking operation in the RAN upon detecting congestion

When the RAN determines that there is congestion in the uplink, the RAN transmits congestion information to a module that processes the protocol, and the module that processes the protocol interprets the corresponding IP header. According to the value of the ECN field in the TOS field of the IP header, the module operates as follows.

### § Inner IP header marking

In the case that a value of the congestion control profile is "Reset ECN", the ECN value is configured to 00 (No ECT) and transferred.

In the case that a value of the congestion control profile is "bypass", the ECN value is not identified and transferred as it is. The congestion control profile being bypass may operate in the same way even in the case that there is no congestion control profile.

In the case that a value of the congestion control profile is L4S marking and that the ECN value of the arrived IP header is ECT(1) capable and that congestion is congestion greater than a designated congestion level or a predefined congestion level threshold, it is configured to ECT(1).

In the case that a value of the congestion control profile is classic ECN marking and that the ECN value of the arrived IP header is ECT(0) capable and is greater than a designated congestion level or a predefined congestion level threshold, two ECN bits are reconfigured to the CE bit (i.e., mark the CE bit), otherwise, the ECT(0) value is maintained as it is.

### § Include information in the GTP header

If the congestion control profile includes a request to transmit the congestion level experienced in the RAN to the UPF, the RAN may include a congestion level experienced therein in the GTP header and transmit the GTP header to the UPF.

### Step 615. Transmit uplink application layer traffic

The RAN transmits uplink application layer traffic to the UPF. In the case that uplink application layer traffic transmitted from the RAN to the UPF experiences congestion as at step 614, a CE bit may be marked in an ECN bit in a TOS field of an inner IP header. Alternatively, a congestion level experienced in the RAN or whether congestion experience may be marked in a GTP header. The congestion level experienced in the RAN may be expressed as information that encodes the number of bits of an appropriate size that may express the congestion level as an integer in the GTP header. Further, whether congestion experience may be expressed as 1 bit information for indicating whether congestion experience or 2 bits expressing whether ECT support, and ECT(0), ECT(1), and CE, as in an ECN bit of an IP header.

When the UPF receives uplink application layer traffic from the RAN, the UPF may perform an L4S/ECN marking operation for a TOS field of an IP header of an inner IP packet.

A module that detects congestion in the UPF manages QoS flows or corresponding packets as a resource for buffering or a resource for modules processing protocols; thus, the UPF may determine whether congestion when transmitting packets processed for each QOS flow.

In order to determine congestion for QoS flows or buffering resources, the UPF may use a predefined congestion level. The congestion level may be determined in various ways from a combination of thresholds for the QoS flow of the UE or the corresponding resource and a computing resource that process the protocol listed above.

According to an ECN field value in the TOS field included in the IP header, whether congestion in the RAN in the GTP header added in the RAN and a value in which an congestion level is encoded, a congestion control L4S/ECN marking control code received from the SMF, and whether congestion, the UPF operates as follows.

According to a congestion control L4S/ECN marking control code, whether congestion, and the ECN value in the arrived IP header, the UPF may operate as follows.

In the case that a congestion control L4S/ECN marking control code value is "reset ECN", an ECN value is configured to 00 (No ECT) and transferred.

In the case that a congestion control L4S/ECN marking control code value is "bypass", the ECN value is not identified but transferred as it is. The congestion control profile being bypass may operate in the same way even in the case that there is no congestion control profile.

In the case that a congestion control L4S/ECN marking control code value is L4S marking and that an ECN value of the arrived IP header is ECT(1) capable and that congestion is congestion greater than the designated congestion level or a predefined congestion level threshold, two ECN bits are reconfigured to the CE bit (i.e., mark the CE bit), otherwise, the ECT(1) value is maintained as it is.

In the case that a congestion control L4S/ECN marking control code value is classic ECN marking and that an ECN value of the arrived IP header is ECT(0) capable and is greater than the designated congestion level or a predefined congestion level threshold, two ECN bits are reconfigured to the CE bit (i.e., mark the CE bit), otherwise, the ECT(0) value is maintained as it is.

Step 616. After performing appropriately marking, the UPF may transmit traffic to the AF through Internet.

### Step 617 to step 621. Reflective L4S/ECN marking operation

In the case that the UPF receives an N4 rule for L4S/ECN local feedback from the SMF at step 607, the UPF may perform an operation according to the received N4 rule.

The UPF records a transmitting address/receiving address and transmitting port/receiving port for uplink traffic. Alternatively, the UPF may record information on the IP and port for downward traffic corresponding to uplink traffic.

For uplink packets that have experienced congestion, the UPF may record IP and port information for corresponding downward packets and use the IP and port information for distinguishing feedback (e.g., TCP response message) traffic of the transport layer of downward traffic corresponding to uplink traffic of the transport layer. For example, the packet may be a packet having the same sender address/receiver address and sender/receiver port number as those of reply traffic returned in response to the packet forwarded by the UPF in a process of step 616. This packet does not necessarily need to indicate a packet returned from the AF with respect to the packet forwarded at step 616, and may indicate a packet sent from the AF and advancing to the UE before step 618 in order to return feedback more quickly from the UPF in the 5G core network.

The UPF may detect recorded downward traffic and perform transport layer ECE marking designated by an N4 rule for the corresponding downward traffic. For example, if the transport layer ECE marking designated by the N4 rule designates ECE marking of the TCP layer, the UPF may configure an ECN echo (ECE) flag of a TCP response message.

The UPF may continue to perform ECE marking while congestion is occurring, and continue to perform ECE marking in the case that congestion is released or until a TCP header in which a congestion window reduced (CWR) flag is configured in the TCP layer is received from the UE.

A situation in which congestion is released in the UPF may be defined as follows.
§ The case that congestion is released in the RAN and that the UPF receives corresponding in-band marking information. For example, the case that the RAN receives a packet that was marked with a CE bit in an ECN bit in an inner IP header and in which marking is then released,
§ The case that congestion is released in the RAN and that information received as in-band header information encoding whether congestion and a congestion level in the corresponding GTP header indicates release of congestion, or the case that the congestion level received in the UPF is lower than a congestion level threshold determined by the UPF,
§ The case that congestion occurs within the UPF, the case that it is determined that release of congestion has occurred, or the case that congestion information within the UPF is smaller than a congestion level threshold level for determining congestion within the UPF.

When the UPF determines that congestion has released, the UPF may reset ECE marking of the TCP transport layer and transmit a TCP packet to the UE.

The RAN transmits received downlink application layer traffic to the UE.

Step 622. Adjust a transmission rate in the application layer/transport layer of the UE

### The UE receives downlink traffic from the RAN.

Downlink traffic received within the UE is transmitted to the transport layer within the UE via the IP layer within the UE.

When traffic including a TCP header in which the ECE bit is configured is transmitted to the transport layer (e.g., TCP layer) within the UE, the transport layer of the UE determines that congestion has occurred on a path transmitted from the UE to the server.

The transport layer of the UE may detect that congestion has occurred in uplink traffic and reduce a size of a congestion window of the transport layer or transmit a signal to the application layer notifying that congestion has occurred.

When the application layer receives a report from the transport layer that congestion has occurred on the uplink, the application layer may perform an operation that may reduce or adjust a transmission rate thereof. For example, the application layer may change to a codec that may generate less traffic.

### Step 623. Congestion reporting in the UPF

In the case that the UPF receives the N4 rule for a report on a congestion experience at step 607, and receives information on a congestion experience from the RAN when transmitting/receiving traffic, or experiences its own congestion therein, the UPF may perform a congestion experience reporting procedure.

When receiving a rule to report a congestion experience in the N4 congestion experience reporting rule, the UPF may report congestion occurrence.

When the UPF receives information including a congestion level threshold in the N4 congestion experience reporting rule, in the case that congestion occurring within the UPF or a congestion level received from the RAN is equal to or greater than a congestion level threshold included in the reporting rule, the UPF may perform a reporting procedure thereof.

In the case of receiving a rule to report a current congestion level in the N4 congestion experience reporting rule, the UPF may immediately report the current congestion level.

The N4 congestion reporting message reported by the UPF may include statistical information on the congestion report. The statistical information of the congestion report may include the following information.

### § Number of congestions that have occurred during the congestion reporting period

### § Average congestion level during the congestion reporting period

§ Number of packets marked as congestion experience during the congestion reporting period.

§ During the congestion reporting period, information on IP flows marked as congestion experience, i.e., IPs and port numbers of transmitting/receiving addresses of congestion packets.

In the case that the N4 rule for congestion reporting includes a notification address for a NF other than the SMF, the UPF may perform congestion reporting to the NF included in the notification address. The NF other than SMF may be an NWDAF, and the NWDAF may request congestion statistics information to the UPF and receive a report thereof.

### Step 624. Congestion report of the SMF

The SMF receives a congestion report from the UPF.

In the case that the SMF receives a congestion report from the UPF according to the congestion report related rules configured at step 606, the SMF may transmit a corresponding congestion reporting message. The SMF may transmit a congestion reporting message to the congestion reporting notification address configured at step 606.

The congestion reporting message transmitted by the SMF may include the following information.

### § Congestion experience information

Current congestion experience information: The SMF may report immediately congestion information in a current state, i.e., a congestion level currently received from the UPF.

Congestion experience occurrence information: In the case that congestion occurs in the UPF, the SMF may perform a reporting procedure thereof.

### § Congestion statistics information

When receiving congestion statistics information from the UPF, the SMF may report the congestion statistics information.

Congestion statistics information may include statistical information related to congestion such as the number of congestions that has occurred during a congestion reporting period, an average congestion level during a congestion reporting period, the number of packets marked as congestion experience during the congestion reporting period, information on IP flows marked as congestion experience during the congestion reporting period, i.e., the IP and port numbers of the transmitting/receiving addresses of congestion packets.

Congestion statistics information may be sent separately as congestion statistics information in the RAN and congestion statistics information in the UPF.

The SMF may transmit a congestion reporting message to the PCF.

Step 625. Report on congestion experiences and statistics.

The PCF may receive congestion experience information or congestion statistics information from the SMF.

The PCF may transmit reports on congestion experiences or congestion statistics to the NEF.

The NEF may transmit reports on congestion experiences or congestion statistics to the AF.

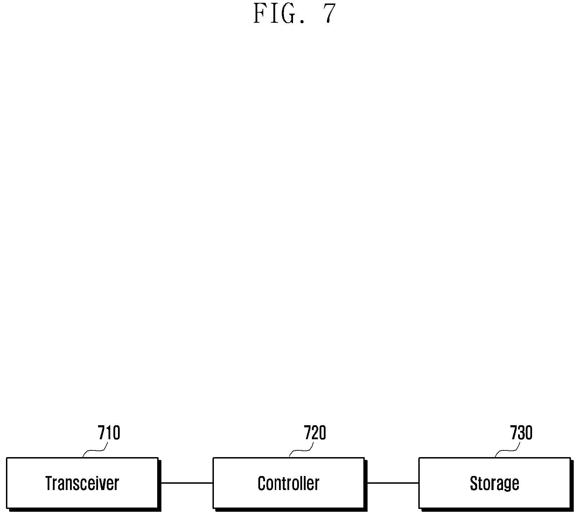

FIG. 7 is a block diagram illustrating a structure of a UE according to an embodiment of the disclosure.

With reference to FIG. 7, the UE may include a transceiver 710, a controller 720, and a storage 730. In the disclosure, the controller may be defined as a circuit, an application-specific integrated circuit, or at least one processor.

The transceiver 710 may transmit and receive signals to and from other network entities. The transceiver 710 may, for example, receive system information from the base station and receive a synchronization signal or a reference signal.

The controller 720 may control the overall operation of the UE according to the embodiment proposed in the disclosure.

The storage 730 may store at least one of information transmitted and received through the transceiver 710 or information generated through the controller 720.

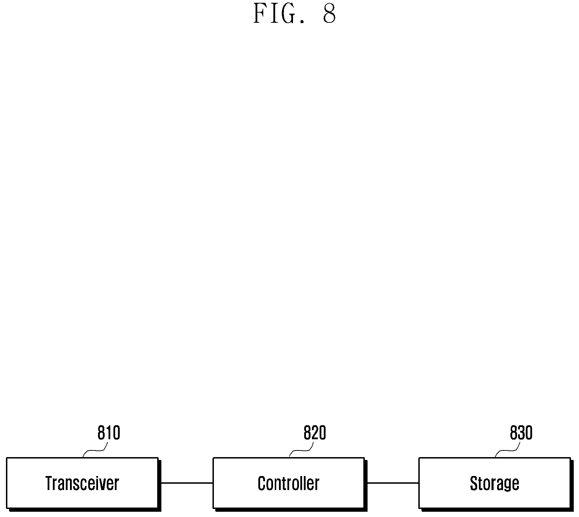

FIG. 8 is a block diagram illustrating a structure of a network entity according to an embodiment of the disclosure.

With reference to FIG. 8, the UE may include a transceiver 810, a controller 820, and a storage 830. In the disclosure, the controller may be defined as a circuit, an application-specific integrated circuit, or at least one processor.

The transceiver 810 may transmit and receive signals to and from other network entities. The transceiver 810 may, for example, receive system information from the base station and receive a synchronization signal or a reference signal.

The controller 820 may control the overall operation of the UE according to the embodiment proposed in the disclosure.

The storage 830 may store at least one of information transmitted and received through the transceiver 810 or information generated through the controller 820.

## Claims

1. A method performed by a user plane function (UPF) in a wireless communication system, the method comprising:
receiving, from a session management function (SMF), a first message including an N4 rule related to a congestion related policy and a congestion reporting policy;
receiving, from a radio access network (RAN), uplink application layer traffic;
recording, in the SMF, information related to transmission and reception of the uplink application layer traffic; and
transmitting, to the SMF, a second message including an N4 report related to congestion based on the record.

2. The method of claim 1, wherein the first message further comprises information associated with congestion local feedback, and
the method further comprises transmitting the uplink application layer traffic to an application server (AS) in the case that congestion occurs in the uplink application layer traffic and that information associated with the congestion local feedback is included in the first message.

3. The method of claim 1, wherein a congestion control code is added in the case that congestion occurs in the uplink application layer traffic.

4. The method of claim 3, wherein the congestion control code is marked in an explicit congestion notification (ECN) bit in a type of service (TOS) field of an Internet protocol (IP) header.

5. A method performed by a session management function (SMF) in a wireless communication system, the method comprising:
receiving, from a policy control function (PCF), a first message including a congestion related policy and a congestion reporting policy;
generating an N4 rule based on the congestion related policy and the congestion reporting policy;
transmitting, to a user plane function (UPF), a second message including the generated N4 rule; and
receiving, from the UPF, a third message including an N4 report related to congestion.

6. The method of claim 5, wherein the first message further comprises information associated with congestion local feedback, and
in the case that congestion occurs in the uplink application layer traffic and that information associated with the congestion local feedback is included in the first message, the uplink application layer traffic is transmitted from the UPF to an application server (AS).

7. The method of claim 5, wherein a congestion control code is added in the case that congestion occurs in the uplink application layer traffic.

8. The method of claim 7, wherein the congestion control code is marked in an explicit congestion notification (ECN) bit in a type of service (TOS) field of an Internet protocol (IP) header.

9. A user plane function (UPF) in a wireless communication system, the UPF comprising:
a transceiver capable of transmitting and receiving at least one signal; and
a controller coupled with the transceiver,
wherein the controller is configured to:
receive, from a session management function (SMF), a first message including an N4 rule related to a congestion related policy and a congestion reporting policy,
receive, from a radio access network (RAN), uplink application layer traffic, record, in the SMF, information related to transmission and reception of the uplink application layer traffic, and
transmit, to the SMF, a second message including an N4 report related to congestion based on the record.

10. The UPF of claim 9, wherein the first message further comprises information associated with congestion local feedback, and
the uplink application layer traffic is transmitted to an application server (AS) in the case that congestion occurs in the uplink application layer traffic and that information associated with the congestion local feedback is included in the first message.

11. The UPF of claim 9, wherein a congestion control code is added in the case that congestion occurs in the uplink application layer traffic.

12. The UPF of claim 11, wherein the congestion control code is marked in an explicit congestion notification (ECN) bit in a type of service (TOS) field of an Internet protocol (IP) header.

13. A session management function (SMF) in a wireless communication system, the SMF comprising:
a transceiver capable of transmitting and receiving at least one signal; and
a controller coupled with the transceiver,
wherein the controller is configured to:
receive, from a policy control function (PCF), a first message including a congestion related policy and a congestion reporting policy,
generate an N4 rule based on the congestion related policy and the congestion reporting policy,
transmit, to a user plane function (UPF), a second message including the generated N4 rule, and
receive, from the UPF, a third message including an N4 report related to congestion.

14. The SMF of claim 13, wherein the first message further comprises information associated with congestion local feedback,
the uplink application layer traffic is transmitted from the UPF to an application server (AS) in the case that congestion occurs in the uplink application layer traffic and that information associated with the congestion local feedback is included in the first message.

15. The SMF of claim 13, wherein a congestion control code is added in the case that congestion occurs in the uplink application layer traffic, and
the congestion control code is marked in an explicit congestion notification (ECN) bit in a type of service (TOS) field of an Internet protocol (IP) header.
